(19) Europäisches Patentamt
European Patent Office
Office européen des brevets

(11) Veröffentlichungsnummer : **0 084 314**
**B1**

(12) # EUROPÄISCHE PATENTSCHRIFT

(45) Veröffentlichungstag der Patentschrift : **30.07.86**

(51) Int. Cl.[4] : **C 09 B 62/03**, C 09 B 62/513, D 06 P 1/38

(21) Anmeldenummer : **83100015.3**

(22) Anmeldetag : **04.01.83**

(54) **Disazoreaktivfarbstoffe.**

(30) Priorität : **15.01.82 DE 3201114**

(43) Veröffentlichungstag der Anmeldung : **27.07.83 Patentblatt 83/30**

(45) Bekanntmachung des Hinweises auf die Patenterteilung : **30.07.86 Patentblatt 86/31**

(84) Benannte Vertragsstaaten : **CH DE FR GB LI**

(56) Entgegenhaltungen :
**EP-A- 0 040 790**
**EP-A- 0 040 806**
**DE-A- 3 113 473**
**Die Akte enthält technische Angaben, die nach dem Eingang der Anmeldung eingereicht wurden und die nicht in dieser Patentschrift enthalten sind.**

(73) Patentinhaber : **BAYER AG**
**Konzernverwaltung RP Patentabteilung**
**D-5090 Leverkusen 1 Bayerwerk (DE)**

(72) Erfinder : **Jäger, Horst, Dr.**
**Carl-Rumpff-Strasse 37**
**D-5090 Leverkusen 1 (DE)**

**EP 0 084 314 B1**

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der vorliegenden Erfindung sind Farbstoffe der allgemeinen Formel

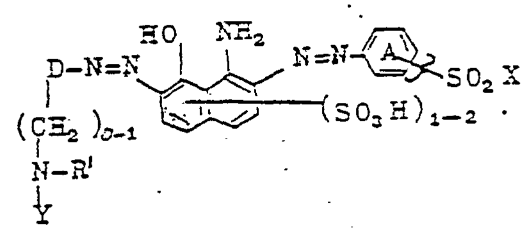

(1)

worin

D = Rest einer Diazokomponente der Benzol- oder Naphthalinreihe

X = $-CH=CH_2$, $-CH_2CH_2OSO_3H$, $-CH=CHCl$, $-CH_2-CH_2Cl$

Y = gegebenfalls durch weitere Reste substituierter faserreaktiver Fluorpyrimidinylrest

R' = H, $CH_3$

u, v = H oder $SO_3H$ wobei u ≠ v,

und worin der Benzolrest A noch durch $CH_3$, $C_2H_5$, $OCH_3$, $OC_2H_5$ substituiert sein kann, insbesondere solche der Formeln

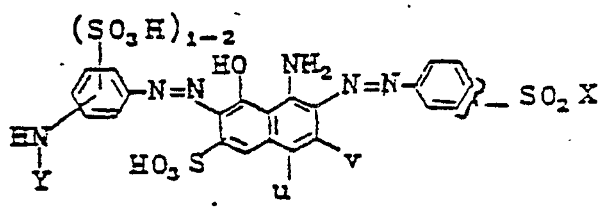

(2)

worin X, Y, u und v die Formel 1 angegebene Bedeutung haben,

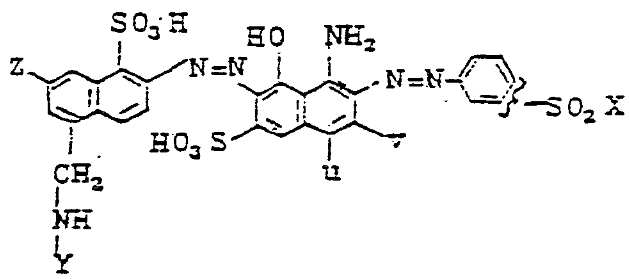

(3)

worin X, u, v und X die in Formel 1 angegebene Bedeutung haben, und Z für H oder $So_3H$ steht, weiterhin solche der Formel

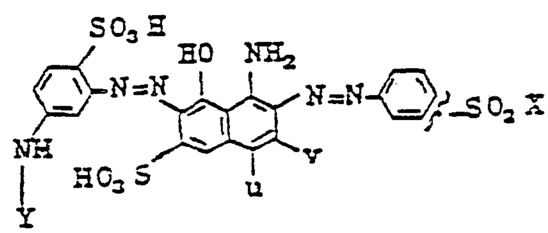

(4)

worin Y, u, v und X die in Formel 1 angegebene Bedeutung haben, und weiterhin solche der Formel

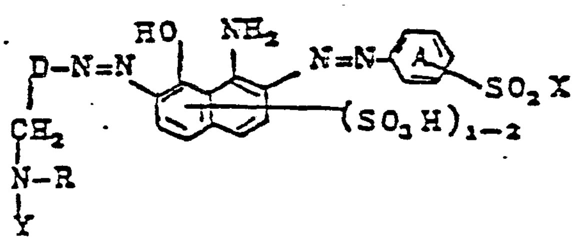

(5)

worin

R  H, $C_1$-$C_4$-Alkyl

D Rest einer Diazokomponente der Benzol- oder Naphthalinreihe

X —$CH=CH_2$, —$CH_2CH_2OSO_3H$, —$CH=CHCl$, —$CH_2$—$CH_2Cl$

Y gegebenenfalls durch weitere Reste substituierter faserreaktiver Fluorpyrimidinylrest und worin der Benzolrest A noch durch $CH_3$, $C_2H_5$, $OCH_3$, $OC_2H_5$ substituiert sein kann, der Formel

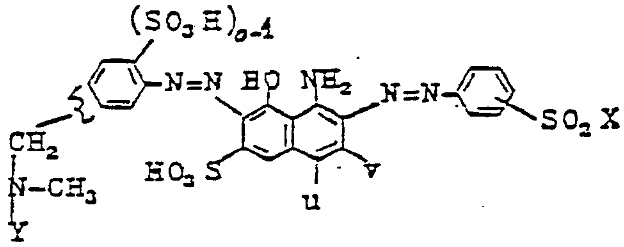

(6)

worin Y, u, v und X die in Formel 1 angegebene Bedeutung haben.

Bevorzugte Farbstoffe sind solche der oben angegebenen Formeln mit Y =

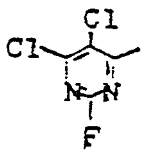

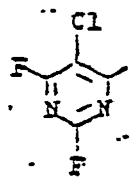

,

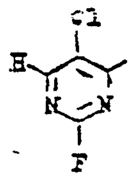

,

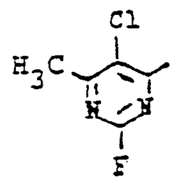

Gegenstand der vorliegenden Erfindung sind weiterhin Farbstoffe der allgemeinen Formel

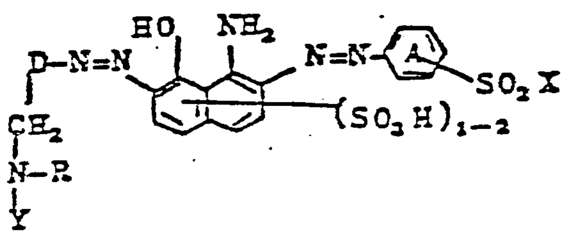

(7)

worin

R = H, $C_1$-$C_4$-Alkyl

D = Rest einer Diazokomponente der Benzol- oder Naphthalinreihe

X = —$CH=CH_2$, —$CH_2CH_2OSO_3H$, —$CH=CHCl$, —$CH_2$—$CH_2Cl$

Y = gegebenfalls durch weitere Reste substituierter faserreaktiver Fluotriazinylrest

und worin der Benzolrest A noch durch $CH_3$, $C_2H_5$, $OCH_3$, $OC_2H_5$ substituiert sein kann, insbesondere Farbstoffe der allgemeinen Formel

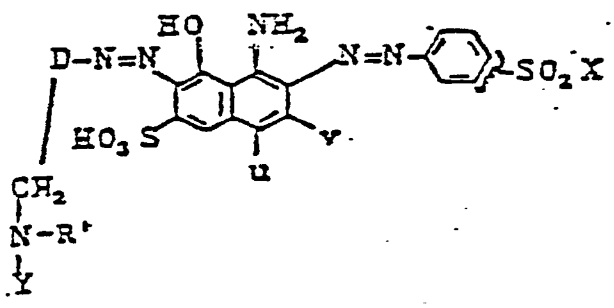

(8)

worin D, X und Y die in Formel (7) angegebene Bedeutung haben, u und v = H oder $SO_3H$, wobei u ≠ v und wobei R' = H oder $CH_3$, sowie Farbstoffe der allgemeinen Formel

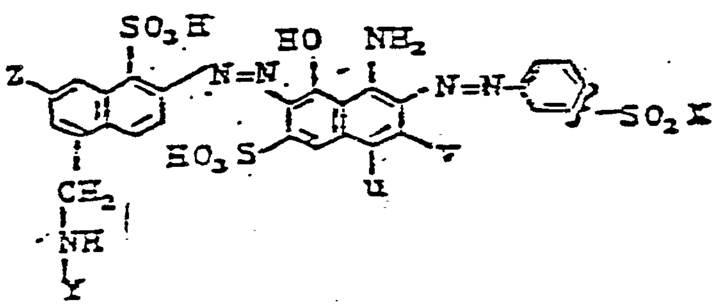

(9)

worin X, Y, die in Formel (7) und u und v die in Formel (8) angegebene Bedeutung haben und Z für H oder $SO_3H$ steht, und Farbstoffe der allgemeinen Formel

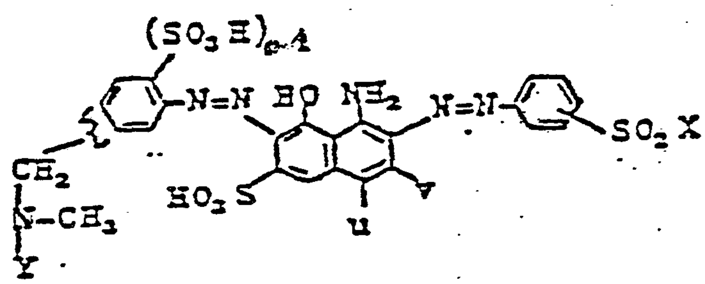

(10)

worin Y, u, v und X die in Formel (8) angegebene Bedeutung haben, wobei generell solche Farbstoffe bevorzugt sind, in denen Y =

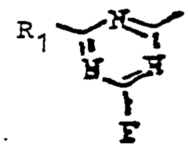

(11)

worin $R_1$ für

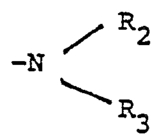

—$OR_4$ oder —$SR_4$ steht, worin

$R_2$ und $R_3$ unabhängig voneinander Wasserstoff, Amino, $C_1$-$C_4$-Alkyl, Aryl, Aralkyl oder Cycloalkyl bedeuten oder zusammen, gegebenenfalls unter Einschluß eines oder mehrerer Heteroatome insbesondere Sauerstoff und/oder Stickstoff, einen Ring bilden, (insbesondere einen 5- oder 6-gliedrigen Ring),

$R_4$ für Wasserstoff, $C_1$-$C_4$-Alkyl, Aryl oder Aralkyl steht.

Bevorzugte Farbstoffe sind dabei solche, in denen $X = CH_2CH_2OSO_3H$ und solche, in denen die Gruppierung $SO_2X$ in p-Stellung zur Azobrücke steht.

Für R kommt als $C_1$-$C_4$-Alkyl in Betracht : Methyl, Ethyl, Propyl, Isopropyl, Butyl, Isobutyl, sek.-Butyl und tert.-Butyl.

Der Rest D kann die bei Azofarbstoffen üblichen Substituenten enthalten. Als diesbezügliche Substituenten sind z. B. folgende zu nennen :

Alkylgruppen mit 1 bis 4 Kohlenstoffatomen, wie Methyl, Ethyl, Propyl, Isopropyl und Butyl, Alkoxygruppen mit 1 bis 4 Kohlenstoffatomen, wie Methoxy, Ethoxy, Propyloxy, Isopropyloxy und Butyloxy, Acylaminogruppen mit 1 bis 6 Kohlenstoffatomen, wie Acetylamino, Propionylamino und Benzoylamino, Carbamoyl, Sulfamoyl, Ureido-, Hydroxy- und Carboxygruppe, Halogen, wie Fluor, Chlor und Brom, und die Sulfonsäuregruppe.

Im einzelnen seien folgende Reste Y genannt :

2-Amino-4-fluor-triazinyl-6, 2-Methylamino-4-fluor-triazinyl-6-, 2-Ethylamino-4-fluor-triazinyl-6, 2-iso-Propylamino-4-fluor-triazinyl-6, 2-Dimethylamino-4-fluor-triazinyl-6, 2-Diethylamino-4-fluor-triazinyl-6, 2-β-Methoxy-ethylamino-4-fluor-triazinyl-6, 2-β-Hydroxyethylamino-4-fluor-triazinyl-6, 2-Di-(β-hydroxyethylamino)-4-fluor-triazinyl-6, 2-β-Sulfoethylamino-4-fluor-triazinyl-6, 2-β-Sulfoethyl-methylamino-4-fluor-triazinyl-6,

2-β-Carboxymethylamino-4-fluor-triazinyl-6,
2-β-Cyanethylamino-4-fluor-triazinyl-6,
2-β-Benzylamino-4-fluor-triazinyl-6
2-β-Phenylethylamino-4-fluor-triazinyl-6,
2-(x-Sulfo-benzyl)-amino-4-fluor-triazinyl-6,
2-Cyclohexylamino-4-fluor-triazinyl-6,
2-(o-, m-, p-Sulfophenyl)-amino-4-fluor-triazinyl-6,
2-(2', 5'-Disulfophenyl)-amino-4-fluor-triazinyl-6,
2-(o-, m-, p-Chlorphenyl)-amino-4-fluor-triazinyl-6,
2-(o-, m-, p-Methoxyphenyl)-4-fluor-trianzinyl-6,
2-(2'-Methyl-4'-sulfophenyl)-amino-4-fluor-triazinyl-6,
2-(2'-Methyl-5'-sulfophenyl)-amino-4-fluor-triazinyl-6,
2-(2'-Chlor-4'-sulfophenyl)-amino-4-fluor-triazinyl-6,
2-(2'-Chlor-5'-sulfophenyl)-amino-4-fluor-triazinyl-6,

2-(2'-Methoxy-4'-sulfophenyl)-amino-4-fluor-triazinyl-6,
2-(o-, m-, p-Carboxyphenyl)-amino-4-fluor-triazinyl-6,
2-(2',4'-Disulfophenyl)-amino-4-fluor-triazinyl-6,
2-(3',5'-Disulfophenyl)-amino-4-fluor-triazinyl-6,
2-(2'-Carboxy-4-sulfophenyl)-amino-4-fluor-triazinyl-6,
2-(6'-Sulfonaphthyl-(2'))-amino-4-fluor-triazinyl-6,
2-(4',8'-Disulfonaphthyl-(2'))-amino-4-fluor-triazinyl-6,
2-(6',8'-Disulfonaphthyl-(2'))-amino-4-fluor-triazinyl-6,
2-(N-Methylphenyl)-amino-4-fluor-triazinyl-6,
2-(N-ethylphenyl)-amino-4-fluor-triazinyl-6,
2-(N-β-Hydroxyethylphenyl)-amino-4-fluor-triazinyl-6,
2-(N-iso-Propylphenyl)-amino-4-fluor-triazinyl-6,
2-Morpholino-4-fluor-triazinyl-6,
2-Piperidino-4-fluor-triazinyl-6,
2-(4',6',8'-Trisulfonaphthyl-(2'))-fluor-triazinyl-6,
2-(3',6',8'-Trisulfonaphthyl-(2'))-4-fluor-triazinyl-6,
2-(3',6'-Disulfonaphthyl-(1'))-4-fluor-triazinyl-6,

2-Fluor-4-pyridinyl-, 2,6-Difluor-4-pyrimidinyl-, 2,6-Difluor-5-chlor-4-pyrimidinyl, 2-Fluor-5,6-dichlor-4-pyrimidinyl-, 2,6-Difluor-5-methyl-4-pyrimidinyl-, 2,5-Difluor-6-methyl-4-pyrimidinyl-, 2-Fluor-5-methyl-6-chlor-4-pyrimidinyl-, 5-Brom-2-fluor-4-pyrimidinyl-, 2-Fluor-5-cyan-4-pyrimidinyl-, 2-Fluor-5-methyl-4-pyrimidinyl-, 2,5,6-Trifluor-4-pyrimidinyl-, 5-Chlor-6-chlormethyl-2-fluor-4-pyrimidinyl-, 2,6-Difluor-5-brom-4-pyrimidinyl-, 2-Fluor-5-brom-6-methyl-4-pyrimidinyl-, 2-Fluor-5-brom-6-chlormethyl-4-pyrimidinyl-, 2,6-Difluor-5-chlormethyl-4-pyrimidinyl-, 2,6-Difluor-5-nitro-4-pyrimidinyl-, 2-Fluor-6-methyl-4-pyrimidinyl-, 2-Fluor-5-chlor-6-methyl-4-pyrimidinyl-, 2-Fluor-5-chlor-4-pyrimidinyl-, 2-Fluor-6-chlor-4-pyrimidinyl-, 6-Trifluormethyl-5-chlor-2-fluor-4-pyrimidinyl-, 6-Trifluormethyl-2-fluor-4-pyrimidinyl-, 2-Fluor-5-nitro-4-pyrimidinyl-, 2-Fluor-5-trifluormethyl-4-pyrimidinyl-, 2-Fluor-5-phenyl- oder -5-methyl-sulfonyl-4-pyrimidinyl-, 2-Fluor-4-carbonamido-4-pyrimidinyl-, 2-Fluor-5-carbomethoxy-4-pyrimidinyl-, 2-Fluor-5-brom-6-trifluormethyl-4-pyrimidinyl-, 2-Fluor-6-carbonamido-4-pyrimidinyl-, 2-Fluor-6-carbomethoxy-4-pyrimidinyl-, 2-Fluor-6-cyan-4-pyrimidinyl-, 2,6-Difluor-5-methylsulfonyl-4-pyrimidinyl-, 2-Fluor-5-sulfonamido-4-pyrimidinyl-, 2-Fluor-5-chlor-6-carbomethoxy-4-pyrimidinyl-, 2,6-Difluor-5-trifluormethyl-4-pyrimidinyl.

Die Alkyl-, Aryl- oder Aralkylreste $R_2$, $R_3$ und $R_4$ können in der Farbstoffchemie übliche Substituenten aufweisen, wie z. B. $SO_3H$, OH, $NH_2$, Alkoxy ($C_1$-$C_4$), COOH, Halogen, CN (insbesondere Cl).

Die Alkylreste $R_2$, $R_3$ und $R_4$ besitzen bevorzugt 1 bis 4 Kohlenstoffatome. Die Arylreste $R_2$, $R_3$ und $R_4$ stehen bevorzugt für Phenyl oder Naphthyl, Aralkyl $R_2$, $R_3$ und $R_4$ steht vorzugsweise für Alkyl ($C_1$-$C_4$) welches durch Phenyl oder Naphthyl substituiert ist.

Die Erfindung betrifft weiterhin ein Verfahren zur Herstellung von Farbstoffen der Formel (1).

Die Verbindungen der Formel (1) - (10) werden beispielsweise wie folgt hergestellt.

1) Ein Amin der Formel

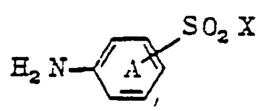

(12)

wird diazotiert, mit einer 8-Amino-1-hydroxy-naphthalin-sulfonsäure der Formel

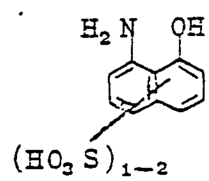

(13)

zu einer Verbindung der Formel

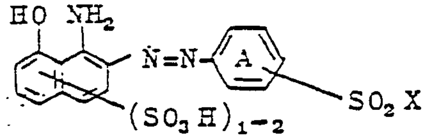

(14)

in saurem Medium gekuppelt, und diese Azoverbindung wird mit der aus einem Diamin der Formel

$$H_2N-D-(CH_2)_{0-1}-\underset{R}{\underset{|}{NH}}$$ (15)

hergestellten Diazoniumverbindung

$$H-\underset{R}{N}-(CH_2)_{0-1}-D-N{\equiv}N^{\oplus}$$

$X^{\ominus}$ (anionischer Rest)

in neutralem bis alkalischem Medium zur Disazoverbindung der Formel

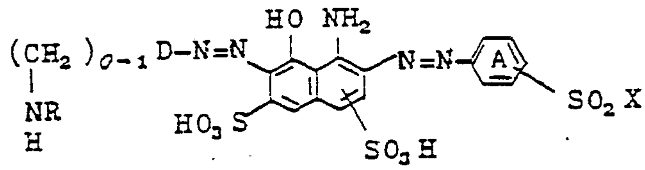 (16)

gekuppelt und diese mit einem durch mindestens zwei Fluoratome und gegebenenfalls durch weitere Reste substituierten Heterocyclus der Formel

F—Y (17)

(F = Fluor)

unter Abspaltung von Flußsäure kondensiert.

In manchen Fällen verwendet man zweckmäßigerweise für die Kupplung im neutralen bis alkalischen Medium, bei welchem ein Diamin als Diazokomponente der Formel

$$H_2N-D-\underset{R}{N}-H \quad (18)$$

verwendet wird, nicht diese selbst, sondern statt dessen eine Amino-acylamino-benzolsulfonsäure, z. B. die 5-Acetylamino-anilin-sulfonsäure, aus der man nach vollzogener Kupplung die Acetyl-gruppe durch Verseifung abspaltet, bevor man weiterkondensiert. Ferner kann man als Diazokomponente der Formel (18) auch eine Nitro-aminoverbindung, z. B. 5-Nitro-anilin-2-sulfonsäure, verwenden und die Nitrogruppe nach der Kupplung mit Schwefelnatrium oder Natriumsulfhydrat zur Aminogruppe reduzieren.

2) Ein Diamin der Formel (15) wird mit einem durch mindestens zwei Fluoratome und gegebenenfalls durch weitere Reste substituierten Heterocyclus der Formel (17) zu einem Amin der Formel

$$H_2N-D-(CH_2)_{0-1}-\underset{R}{N}-Y \quad (19)$$

kondensiert, das diazotiert und im neutralen bis alkalischen Medium mit einer Kupplungskomponente der Formel (14) zu einem Farbstoff der Formel (1) gekuppelt wird.

Für den Fall, daß Y =

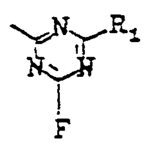

ergibt sich für die Herstellungsmöglichkeiten 1 und 2 eine zusätzliche Variante, die dadurch gekennzeichnet ist, daß man

bei 1 : die Bisazoverbindung (16) und

bei 2 : die Diaminoverbindung (15)

zunächst mit 2,4,6-Trifluortriazin der Formel

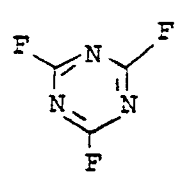 (20)

kondensiert und das erhaltene primäre Kondensationsprodukt mit einer Verbindung der Formel

$$H{-}R_1 \quad (21)$$

unter Abspaltung von Flußsäure kondensiert.

Die Herstellung der erfindungsgemäßen Farbstoffe und Farbstoffzwischenprodukte erfolgt vorzugsweise in wäßrigem Medium.

Die Umsetzung mit fluorhaltigen Heterocyclen erfolgt bei schwach saurem bis schwach alkalischem pH-Wert. Die bei der Kondensation freiwerdende Fluorwasserstoffsäure wird durch Zugabe von verdünnter Alkalihydroxid- bzw. -carbonat- oder -bicarbonat-Lösung neutralisiert.

Als Ausgangsverbindung zur Herstellung der Reaktivfarbstoffe der Formel (1) können beispielsweise genannt werden :

a) Kupplungskomponenten der Formel (13)

1-Amino-8-hydroxynaphthalin-3,6-disulfonsäure (H-Säure),
1-Amino-8-hydroxynaphthalin-4,6-disulfonsäure (K-Säure),
1-Amino-8-hydroxynaphthalin-4-sulfonsäure.

b) Diazokomponenten der Formel (12)

4-Vinylsulfonylanilin,
3-Vinylsulfonylanilin,
2,5-Dichlor-4-vinylsulfonylanilin,
2-Methoxy-5-vinylsulfonylanilin,
Schwefelsäurehalbester des 4-β-Hydroxyethylsulfonylanilins, des 3-β-Hydroxyethylsulfonylanilins, des 2-Methoxy-5-β-hydroxyethylsulfonylanilins,
4-β-Chlorethylsulfonylanilin,
4-β-Chlorvinylsulfonylanilin.

c) Diazokomponenten der Formel (15)

1,3- und 1,4-Diaminobenzol, 1,3- und 1,4-Diaminoanisol,
1,3- und 1,4-Diaminotoluol, 1,3-Diamino-4-chlorbenzol,
1,3-Diamino-4-ethylbenzol, 1,3-Diamino-4-ethoxybenzol,
1,3-Diaminobenzol-4-sulfonsäure, 1,4-Diaminobenzol-2-sulfonsäure, 1,4-Diaminobenzol-2,5-disulfonsäure, 1,4-Diaminobenzol-2,6-disulfonsäure, 1,3-Diaminobenzol-4,6-disulfonsäure.
2-Amino-5-aminomethylnaphthalin-sulfonsäure-1,
2-Amino-5-aminomethylnaphthalin-disulfonsäure-1,7,
1-Amino-5-N-methylaminomethylbenzol-sulfonsäure-2,
1-Amino-3-aminomethyl-4-methoxy-benzol-sulfonsäure-2,
1-Amino-3-N-methylaminomethylbenzol,
1-Amino-4-N-methylaminomethylbenzol.

d) Fluorheterocyclen der Formel (17)

2,4-Difluor-6-(o-, m-, p-methyl-phenyl)-amino-triazin, 2,4-Difluor-6-(o-, m-, p-sulfophenyl)-amino-triazin, 2,4-Difluor-6-methoxy-triazin, 2,4-Difluor-6-(2′,5′-disulfophenyl)-amino-triazin, 2,4-Difluor-6-(6′-sulfonaphthyl-2′)-amino-triazin, 2,4-Difluor-6-(o-, m-, p-ethylphenyl)-amino-triazin, 2,4-Difluor-6-(o-, m-, p-chlorphenyl)-amino-triazin, 2,4-Difluor-6-(o-, m-, p-methoxyphenyl)-amino-triazin, 2,4-Difluor-6-(2′-methyl-5′-sulfophenyl)-amino-triazin, 2,4-Difluor-6-(2′-methyl-4′-sulfophenyl)-amino-triazin, 2,4-Difluor-6-(2′-chlor-4′-sulfophenyl)-amino-triazin, 2,4-Difluor-6-(2′-chlor-5′-sulfophenyl)-amino-triazin, 2,4-Difluor-6-(2′-methoxy-4′-sulfophenyl)-amino-triazin, 2,4-Difluor-6-(o-, m-, p-carboxyphenyl)-amino-triazin, 2,4-Difluor-6-(N-methyl-phenyl)-amino-triazin, 2,4-Difluor-6-(N-ethyl-phenyl)-amino-triazin, 2,4-Difluor-6-(N-isopropyl-phenyl)-amino-triazin, 2,4-Difluor-6-cyclohexylamino-triazin, 2,4-Difluor-6-morpholino-triazin, 2,4-Difluor-6-piperidino-triazin, 2,4-Difluor-6-benzylamino-triazin, 2,4-Difluor-6-N-methyl-benzylamino-triazin, 2,4-Difluor-6-β-phenylethyl-amino-triazin, 2-4-Difluor-6-(X-sulfo-benzyl)-amino-triazin, 2,4-Difluor-6-(2′,4′-disulfophenyl)-amino-triazin, 2,4-Difluor-6-(3′,5′-disulfophenyl)-amino-triazin, 2,4-Difluor-6-(2′-carboxy-4′-sulfo-phenyl)-amino-triazin, 2,4-Difluor-6-(2′,5′-disulfo-4-methoxyphenyl)-amino-triazin, 2,4-Difluor-(2′-methyl-4′,6′-disulfophenyl)-amino-triazin, 2,4-Difluor-(6′,8′-disulfonaphthyl-(2′))-amino-triazin, 2,4-Difluor-(4′,8′-disulfonaphthyl-(2′))-amino-triazin, 2,4-Difluor-(4′,6′,8′-trisulfo-naphthyl)-(2′))-amino-triazin, 2,4-Difluor-(3′,6′,8′-trisulfonaphthyl-(2′))-amino-triazin, 2,4-Difluor-(3′,6′-disulfonaphthyl-(1′))-amino-triazin,

2,4-Difluor-6-amino-triazin, 2,4-Difluor-6-methylamino-triazin, 2,4-Difluor-6-ethylamino-triazin, 2,4-Difluor-6-methoxyethoxy-triazin, 2,4-Difluor-6-methoxy-ethylamino-triazin, 2,4-Difluor-6-dimethylamino-triazin,

2,4-Difluor-6-diethylamino-triazin, 2,4-Difluor-6-isopropylamino-triazin, Tetrafluor-pyrimidin, Trifluorpyrimidin, -Difluorpyrimidin ; 2,4-Difluor-6-methyl-pyrimidin, 2,6-Difluor-4-methyl-5-chlorpyrimidin,

2,4-Difluor-pyrimidin-5-ethylsulfon, 2,6-Difluor-4-chlorpyrimidin, 2,4,6-Tri-fluor-5-chlorpyrimidin, 2,6-Difluor-4-methyl-5-brom-pyrimidin, 2,4-Difluor-5,6-dichlor- oder -dibrompyrimidin, 4,6-Difluor-2,5-dichlor- oder -dibrompyrimidin, 2,6-Difluor-4-brompyrimidin, 2,4,6-Trifluor-5-brompy-rimidin, 2,4,6-Trifluor-5-chlormethylpyrimidin, 2,4,6-Trifluor-5-nitropyrimidin, 2,4,6-Trifluor-5-cyanpyrimidin, 2,4,6-Trifluorpyrimidin-5-carbonsäurealkylester oder -5-carbonsäureamide, 2,6-Difluor-5-methyl-4-chlorpyrimidin, 2,6-Difluor-5-chlorpyrimidin, 2,4,6-Trifluor-5-methylpyrimidin,

2,4-Difluor-5-nitro-6-chlorpyrimidin, 2,4-Difluor-5-cyanpyrimidin, 2,4-Difluor-5-methylpyrimidin, 6-Trifluormethyl-5-chlor-2,4-difluorpyrimidin, 6-Phenyl-2,4-difluorpyrimidin, 6-Trifluormethyl-2,4-difluorpyrimidin, 5-Trifluormethyl-2,4,6-trifluorpyrimidin,

2,4-Difluor-5-nitro-pyrimidin, 2,4-Difluor-5-trifluormethylpyrimidin, 2,4-Difluor-5-methylsulfonyl-pyrimidin, 2,4-Difluor-5-phenyl-pyrimidin, 2,4-Difluor-5-carbonamido-pyrimidin, 2,4-Difluor-5-carbomethoxy-pyrimidin, 2,4-Difluor-6-trifluormethylpyrimidin, 2,4-Difluor-6-carbonamido-pyrimidin, 2,4-Difluor-6-carbomethoxypyrimidin, 2,4-Difluor-6-phenyl-pyrimidin, 2,4-Difluor-6-cyanpyrimidin, 2,4,6-Trifluor-5-methylsulfonylpyrimidin, 2,4-Difluor-5-sulfonamido-pyrimidin, 2,4-Difluor-5-chlor-6-carbomethoxy-pyrimidin, 5-Trifluormethyl-2,4-difluorpyrimidin.

e) 2,4,6-Trifluor-s-triazin der Formel (20)

f) Verbindungen der Formel (21)

Methanol, Methylmercaptan, Thiophenol, Phenol, p-Nitrophenol, Phenol-4-sulfonsäure,

Ammoniak, Methylamin, Dimethylamin, Ethylamin, Diethylamin, Propylamin, Isopropylamin, Butylamin, Dibutylamin, Isobutylamin, sek.-Butylamin, Hexylamin, Methoxyethylamin, Ethoxyethylamin, Methoxypropylamin, Chlorethylamin, Hydroxyethylamin, Dihydroethylamin, Hydroxypropylamin, Aminoethansulfonsäure, β-Sulfatoethylamin, Benzylamin, Cyclohexylamin, Anilin, o-, m- und p-Toluidin, 2,3-, 2,4-, 2,5-, 2,6-, 3,4- und 3,5-Dimethylanilin, o-, m-, und p-Chloranilin, N-Methylanilin, N-Ethylanilin, 3- oder 4-Acetylaminoanilin, o-, m- und p-Nitroanilin, o-, m- und p-Aminophenol, 2-Methyl-4-nitroanilin, 2-Methyl-5-nitroanilin, 2,5-Dimethoxyanilin, 3-Methyl-4-nitroanilin, 2-Nitro-4-methylanilin,

3-Nitro-4-methylanilin, o-, m- und p-Anisidin, o-, m- und p-Phenetidin, 2-Methoxy-5-methylanilin,

2-Ethoxy-5-methoxyanilin, 4-Bromanilin,

4-Aminophenylsulfamid, 3-Trifluormethylanilin, 3- und 4-Aminophenylharnstoff, 1-Naphthylamin, 2-Naphthylamin,

2-Amino-1-hydroxy-naphthalin, 1-Amino-4-hydroxy-naphthalin, 1-Amino-8-hydroxy-naphthalin, 1-Amino-2-hydroxy-naphthalin, 1-Amino-7-hydroxy-naphthalin, Orthanilsäure, Metanilsäure, Sulfanilsäure, Anilin-2,4-disulfonsäure, Anilin-2,5-disulfonsäure, Anilin-3,5-disulfonsäure, Anthranilsäure, m- und p-Aminobenzoesäure, 4-Amino-phenylmethansulfonsäure, Anilin-N-methansulfonsäure,

2-Aminotoluol-4-sulfonsäure, 2-Aminotoluol-5-sulfonsäure, p-Aminosalicylsäure, 1-Amino-4-carboxy-benzol-3-sulfonsäure, 1-Amino-2-carboxy-benzol-5-sulfonsäure,

1-Amino-5-carboxy-benzol-2-sulfonsäure, 1-Naphthylamin-2-, -3-, -4-, -5-, -6-, -7- und -8-sulfonsäure, 2-Naphthylamin-1-, -3-, -4-, -5-, -6-, -7- und -8-sulfonsäure, 1-Naphthylamin-2,4-, -2,5-, -2,7-, -2,8-, -3,5-, -3,6-, -3,7-, -3,8-, -4,6-, -4,7-, -4,8- und -5,8-disulfonsäure, 2-Naphthylamin-1,5-, -1,6-, -1,7-, -3,6-, -3,7-, -4,7-, -4,8-, -5,7- und -6,8-disulfonsäure, 1-Naphthylamin-2,4,6-, -2,4,7-, -2,5,7-, -3,5,7-, -3,6,8- und -4,6,8-trisulfonsäure, 2-Naphthylamin-1,3,7-, -1,5,7-, -3,5,7-, 3,6,7- -3,6,8- und -4,6,8-trisulfonsäure, 2-, 3- und 4-Aminopyridin, 2-Aminobenthiazol, 5-, 6- und 8-Aminochinolin, 2-Aminopyrimidin, Morpholin, Piperidin und Piperazin.

N-β-Hydroxyethylanilin, Semicarbazid, Benzosäurehydrazid, 4-(β-Sulfatoethylsulfonyl)-anilin, 3-(β-Sulfatoethylsulfonyl)-anilin, 4-Amino-1-methoxy-benzol-2-sulfonsäure, 4-Amino-1-ethoxy-benzol-2-sulfonsäure,

4-Aminophenol-6-sulfonsäure,
2-Aminophenol-5-sulfonsäure,
4-Aminotoluol-2-sulfonsäure,
β-N-Methylaminopropionitril,
β-Aminopropionitril,
Aminoessigsäure.

Die Reaktivfarbstoffe der Formel (1)-(10) können isoliert und zu brauchbaren, trockenen Färbepräparaten verarbeitet werden. Die Isolierung erfolgt vorzugsweise bei möglichst niedrigen Temperaturen durch Aussalzen und Filtrieren. Die filtrierten Farbstoff können gegebenenfalls nach Zugabe von Coupagemitteln und/oder Puffermitteln, z. B. nach Zugabe eines Gemisches gleicher Teile Mono- und Dinatriumphosphat, getrocknet werden ; vorzugsweise wird die Trocknung bei nicht zu hohen Temperaturen und unter vermindertem Druck vorgenommen. Durch Zerstäubungstrocknung des ganzen Herstellungsgemisches kann man in gewissen Fällen die erfindungsgemäßen trockenen Präparate direkt, d. h. ohne Zwischenisolierung der Farbstoffe herstellen.

Die Reaktivfarbstoffe der Formel (1)-(10) zeichnen sich durch hohe Reaktivität aus, und sie ergeben Färbungen mit guten Nass- und Lichtechtheiten. Besonders hervorzuheben ist es, daß die Farbstoffe eine gute Löslichkeit und Elektrolytlöslichkeit bei guten Auszieheigenschaften und hoher Farbstoff-Fixierung aufweisen, und daß sich die nicht fixierten Anteile leicht entfernen lassen. Die Färbungen sind ätzbar.

Die Reaktivfarbstoffe der Formel (1)-(10) eignen sich zum Färben und Bedrucken der verschiedensten Substrate, wie Seide, Leder, Wolle, Superpolyamidfasern und Superpolyamidurethanen, insbesondere aber cellulosehaltiger Materialien faseriger Struktur, wie Leinen, Zellstoff, regenerierte Cellulose und vor allem Baumwolle. Sie eignen sich sowohl für das Ausziehverfahren als auch zum Färben nach dem Foulardfärbeverfahren, wonach die Ware mit wässrigen und gegebenenfalls auch salzhaltigen Farbstofflösungen imprägniert wird, und die Farbstoffe nach einer Alkalibehandlung oder in Gegenwart von Alkali gegebenenfalls unter Wärmeeinwirkung fixiert werden.

Sie eignen sich auch zum Druck, insbesondere auf Baumwolle, ebenso aber auch zum Bedrucken von stickstoffhaltigen Fasern z. B. von Wolle, Seide oder Wolle enthaltenden Mischgeweben.

Es empfiehlt sich, die Färbungen und Drucke einem gründlichen Spülen mit kaltem und heissem Wasser, gegebenenfalls unter Zusatz eines dispergierend wirkenden und die Diffusion der nicht fixierten Anteile fördernden Mittels zu unterwerfen. Die angegebenen Formeln sind die der freien Säuren. Die Farbstoffe werden im allgemeinen in Form ihrer Salze eingesetzt. Geeignete Salze sind insbesondere die Alkalisalze (Li-, Na-, K-) oder Ammoniumsalze.

Nächstvergleichbaren Fluortriazinylfarbstoffen gemäß EP-A 40 806 sind die neuen Fluortriazinyltypen hinsichtlich der Hypochloritechtheit gemäß DIN 54 035 überlegen.

Von strukturell ähnlichen Disazoreaktivfarbstoffen gemäß GB-A 2 076 006 unterscheiden sich die erfindungsgemäßen Farbstoffe entweder dadurch, daß der Reaktivrest über eine Methylenbrücke mit dem Chromophor verbunden ist oder — bei Fehlen dieser Brücke — der charakteristische Rest $SO_2X$ die m- oder p-Stellung zur Azogruppe einnimmt. Aufgrund dieser Strukturunterschiede zeichnen sich die neuen Farbstoffe durch verbesserte anwendungstechnische Eigenschaften, wie z. B. bessere Licht- und Hypochloritechtheit sowie höhere Farbstärke, aus.

Beispiel 1

87,4 g des Farbstoffs der Formel

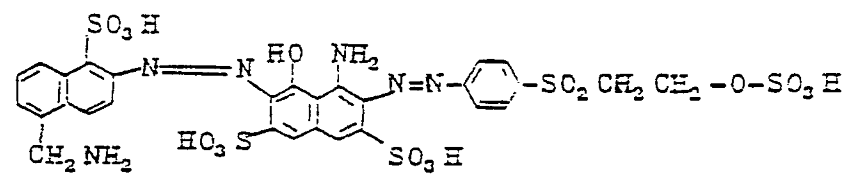

werden in 1 000 ml Wasser angerührt. Man kühlt auf 12-15° ab und tropft in 1/2 Stunde 17 g 2,4,6-Trifluor-5-chlor-pyrimidin ein und hält durch gleichzeitige Zugabe von 10%iger Natronlauge den pH zwischen 8,0 und 8,5. Nach beendeter Kondensation wird der Farbstoff ausgesalzen. Man erhält ein dunkles Pulver, das sich leicht in Wasser mit blauer Farbe löst und Baumwolle in dunkelblauen (39) bis schwarzen Tönen färbt. Der Farbstoff entspricht der Formel

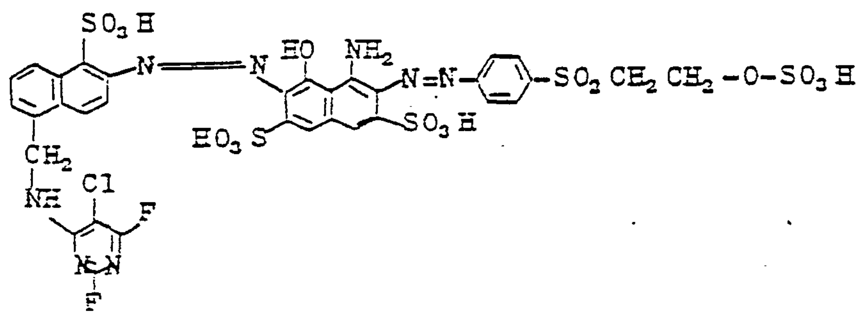

Ersetzt man in Beispiel 1 das 2,4,6-Trifluor-5-chlor-pyrimidin durch die nachfolgend aufgeführten Fluorheterocyclen, so erhält man gleichfalls Reaktivfarbstoffe, die Baumwolle in dunkelblauen (39) bis schwarzen Tönen färben (in Klammer: Colour Index hue-number).

Tabelle 1

A 2,4,6-Trifluor-5-chlor-pyrimidin
B 2,4-Difluor-5,6-dichlor-pyrimidin
C 2,4-Difluor-5-chlor-6-methyl-pyrimidin

D 2,4-Difluor-5-chlor-pyrimidin
E 2,4-Difluor-6-amino-triazin
F 2,4-Difluor-6-methylamino-triazin
G 2,4-Difluor-6-(o-sulfophenylamino)-triazin
H 2,4-Difluor-6-(m-sulfophenylamino)-triazin
J 2,4-Difluor-6-(p-sulfophenylamino)-triazin
K 2,4-Difluor-6-(2'-methyl-5'-sulfophenylamino)-triazin

Ersetzt man in Beispiel 1 den Disazofarbstoff durch die in Spalte 2 genannten Disazofarbstoffe, das 2,4,6-Tri-fluor-5-chlorpyrimidin durch die in Spalte 3 aufgeführten Fluorheterocyclen und verfärbt im übrigen wie in Beispiel 1 angegeben, so erhält man gleichfalls Reaktivfarbstoffe, die Baumwolle in den in Spalte 4 aufgeführten Tönen färben (in Klammer : Colour-Index hue-number).

(Siehe Tabelle 2 Seite 11 ff.)

Tabelle 2

| Beispiel | Disazofarbstoff | Fluorheterocyclus | Farbton mit Colour-Index hue-number |
|---|---|---|---|
| 1 | 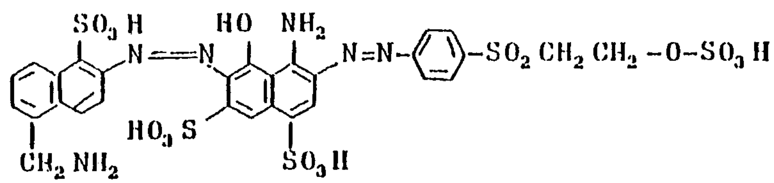 | A | dunkelblau (39) |
| 2 | " | D | " |
| 3 | " | E | " |
| 4 | " | G | " |
| 5 | 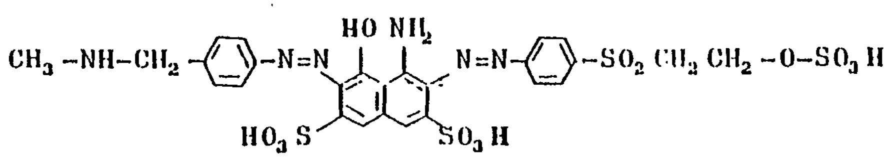 | A | dunkelblau (39) |
| 6 | " | D | " |
| 7 | " | E | " |
| 8 | " | G | " |

Tabelle 2 (Fortsetzung)

| Beispiel | Disazofarbstoff | Fluorheterocyclus | Farbton mit Colour-Index hue-number |
| --- | --- | --- | --- |
| 9 | 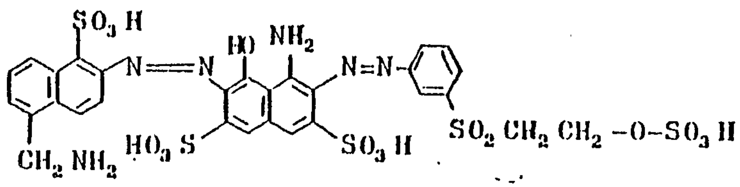 | A | " |
| 10 | " | B | " |
| 11 | " | E | " |
| 12 | " | K | " |
| 13 | 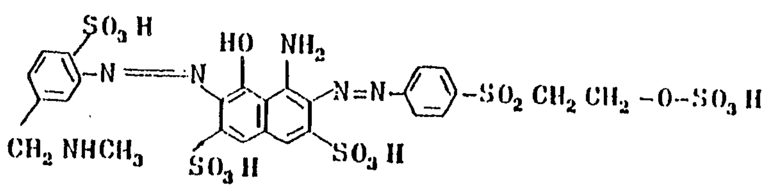 | A | marineblau (28) |
| 14 | " | B | " |
| 15 | " | D | " |
| 16 | " | E | " |

Tabelle 2 (Fortsetzung)

| Beispiel | Disazofarbstoff | Fluorhete-rocyclus | Farbton mit Colour-Index hue-number |
|---|---|---|---|
| 17 | 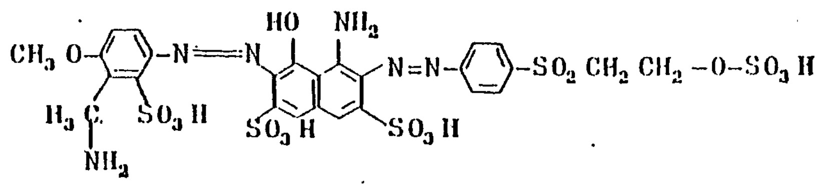 | A | grünstichig blau (40) |
| 18 | " | B | " |
| 19 | " | C | " |
| 20 | " | D | " |
| 21 | 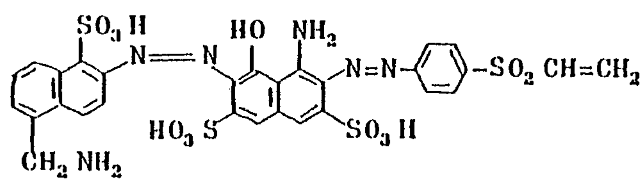 | A | dunkelblau (39) |
| 22 | 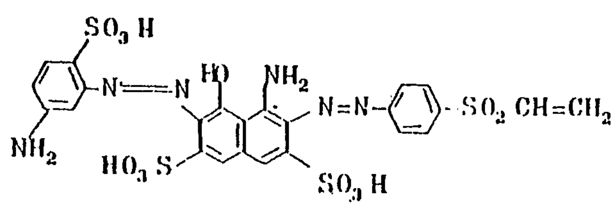 | A | marineblau (28) |

Beispiel 23

61,1 g des Farbstoffs der Formel

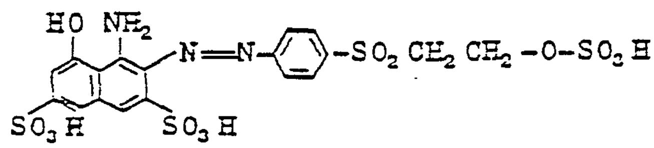

werden bei pH 6-7 mit der Diazoniumverbindung aus 33,7 g des Kondensationsproduktes von 18,8 g 1,3-Diaminobenzol-6-sulfonsäure mit 17 g 2,4,6-Trifluor-5-chlor-pyrimidin zu einem dunkelblauen Farbstoff gekuppelt. Nach Aussalzen, Isolieren, Trocknen und Mahlen fällt der Farbstoff der Formel

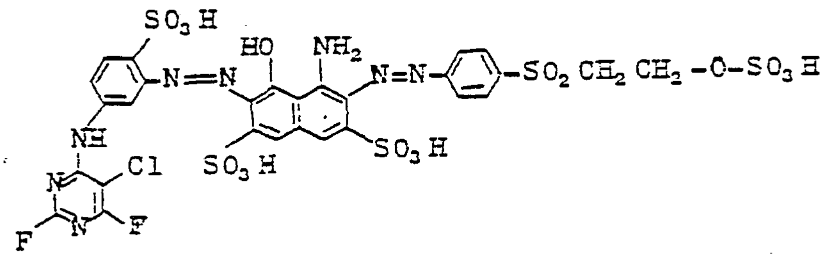

als dunkles Pulver an, der sich in Wasser mit blauer Farbe löst und Baumwolle in marineblauen (28) bis schwarzen Tönen färbt.

Wenn man nach der geschilderten Arbeitsweise verfährt und als Ausgangsprodukt für die Diazoniumverbindung die Kondensationsprodukte verwendet, die aus den in Spalte 2 genannten Diaminobenzolsulfonsäuren und den in Spalte 3 aufgeführten Fluorheterocyclen erhältlich sind, und als Monoazofarbstoffe, die bei pH 6-7 ankuppelbar sind, die in Spalte 4 beschriebenen Verbindungen einsetzt, so erhält man gleichfalls Reaktivfarbstoffe, die Baumwolle in den in Spalte 5 genannten Tönen färben (in Klammer : Colour Index hue-number).

(Siehe Tabelle 3 Seite 15 f.)

Tabelle 3

| Beispiel | Diaminobenzolsulfonsäure | Fluor= pyrimidin | Monoazofarbstoff | Farbton mit Colour-Index hue-number |
|---|---|---|---|---|
| 24 | 1,3-Diaminobenzol-6-sulfonsäure | B | 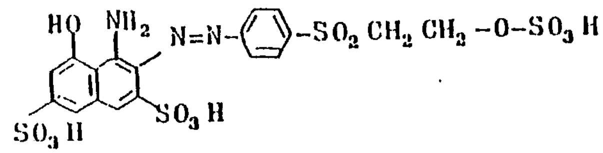 | marineblau (28) |
| 25 | 1,4-Diaminobenzol-2-sulfonsäure | A | " | grünst.blau (48) |
| 26 | " | B | " | " |
| 27 | 1,4-Diaminobenzol-2,5-disulfonsäure | A | " | " |
| 28 | " | D | " | " |

**Patentansprüche**

1. Farbstoffe der allgemeinen Formel

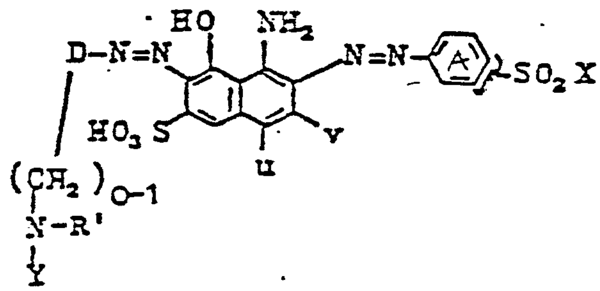

worin

D = Rest einer Diazokomponente der Benzol- oder Naphthalinreihe
X = $-CH=CH_2$, $-CH_2CH_2OSO_3H$, $-CH=CHCl$, $-CH_2-CH_2Cl$
Y = gegebenenfalls durch weitere Reste substituierter faserreaktiver Fluorpyrimidinylrest
R' = H, $CH_3$
u, v = H oder $SO_3H$ wobei u $\neq$ v und worin der Benzolkern A noch durch $CH_3$, $C_2H_5$, $OCH_3$ oder $OC_2H_5$ substituiert sein kann.

2. Farbstoffe der allgemeinen Formel

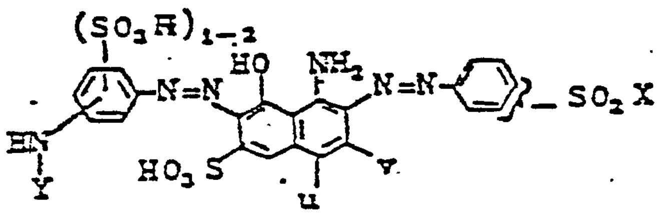

worin X und Y, u und v die in Anspruch 1) angegebene Bedeutung haben.

3. Farbstoffe der allgemeinen Formel

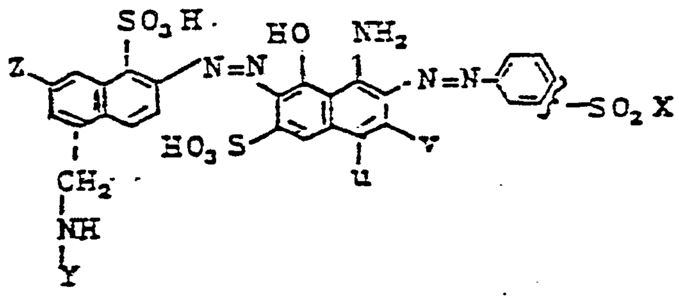

worin X, Y, u und v die in Anspruch 1 angegebene Bedeutung haben und Z für H oder $SO_3H$ steht.

4. Farbstoffe der allgemeinen Formel

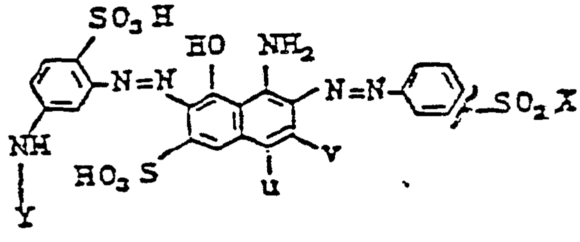

worin Y, u, v und X die in Anspruch 1 angegebene Bedeutung haben.

5. Farbstoffe der allgemeinen Formel

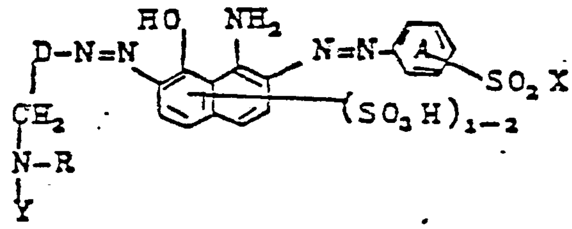

worin
R = H, $C_1$-$C_4$-Alkyl
D = Rest einer Diazokomponente der Benzol- oder Naphthalinreihe
X = $—CH=CH_2$, $—CH_2CH_2OSO_3H$, $—CH=CHCl$, $—CH_2—CH_2Cl$
Y = gegebenenfalls durch weitere Reste substituierter faserreaktiver Fluorpyrimidinylrest und worin der Benzolrest A noch durch $CH_3$, $C_2H_5$, $OCH_3$, $OC_2H_5$ substituiert sein kann.

6. Farbstoffe der allgemeinen Formel

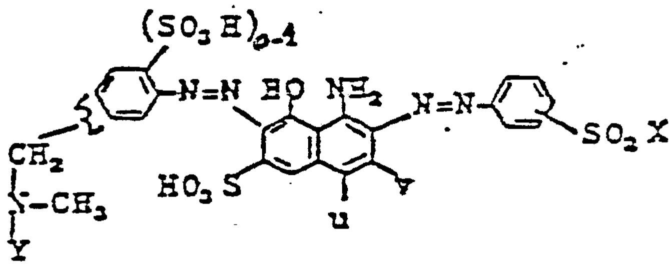

worin Y, u, v und X die in Anspruch 1 angegebene Bedeutung haben.

7. Farbstoffe der Ansprüche 1 bis 6, in denen Y =

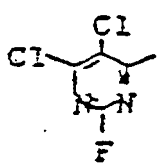 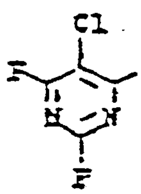 , 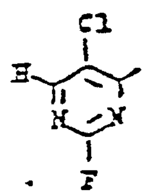 , 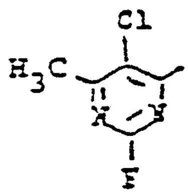

8. Farbstoffe der allgemeinen Formel

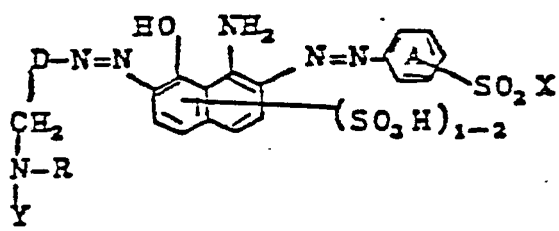

worin
R = H, $C_1$-$C_4$-Alkyl
D = Rest einer Diazokomponente der Benzol- oder Naphthalinreihe
X = $—CH=CH_2$, $—CH_2CH_2OSO_3H$, $—CH=CHCl$, $—CH_2—CH_2Cl$
Y = gegebenenfalls durch weitere Reste substituierter faserreaktiver Fluotriazinylrest und worin der Benzolrest A noch durch $CH_3$, $C_2H_5$, $OCH_3$, $OC_2H_5$ substituiert sein kann.

9. Farbstoffe der allgemeinen Formel

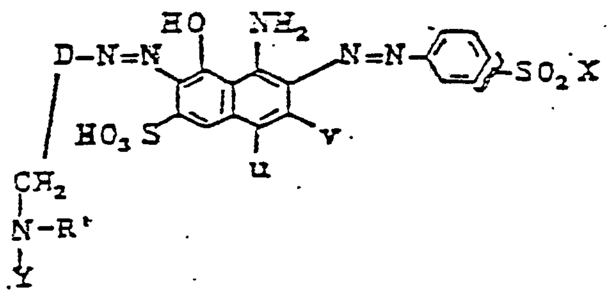

worin D, X und Y die in Anspruch 8) angegebene Bedeutung haben, u und v = H oder $SO_3H$, wobei $u \neq v$ und wobei R' = H oder $CH_3$.

10. Farbstoffe der allgemeinen Formel

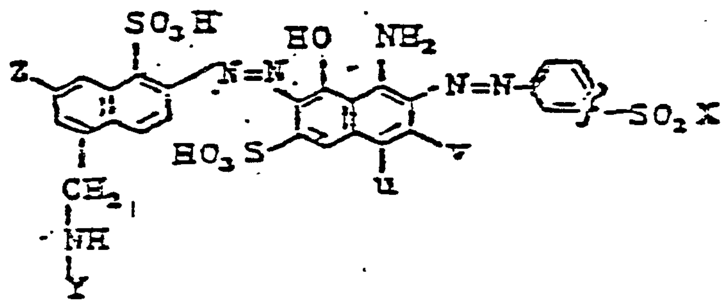

worin X, Y, u und v die in Anspruch 8 bzw. 9 angegebene Bedeutung haben und Z für H oder $SO_3H$ steht.

11. Farbstoffe der allgemeinen Formel

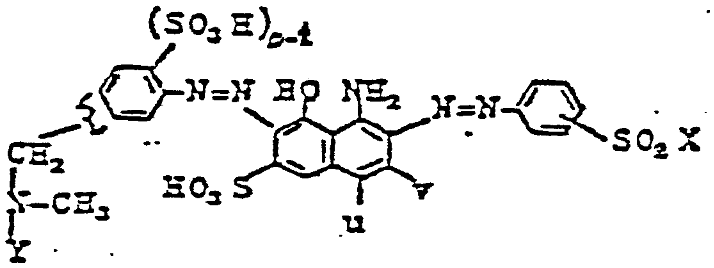

worin Y, u, v und X die in Anspruch 8 bzw. 9 angegebene Bedeutung haben.

12. Farbstoffe des Ansprüche 8 bis 11, in denen Y =

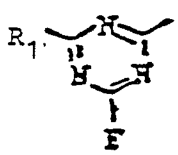

und in denen $R_1$ für

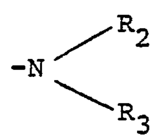

—$OR_4$ oder —$SR_4$ steht, worin

$R_2$ und $R_3$ unabhängig voneinander Wasserstoff, Amino, $C_1$-$C_4$-Alkyl, Aryl, Aralkyl oder Cycloalkyl bedeuten oder zusammen, gegebenenfalls unter Einschluß eines oder mehrerer Heteroatome insbesondere Sauerstoff und/oder Stickstoff, einen Ring bilden, (insbesondere einen 5- oder 6-gliedrigen Ring),

$R_4$ für Wasserstoff, $C_1$-$C_4$-Alkyl, Aryl oder Aralkyl steht.

**Claims**

1. Dyestuffs of the general formula

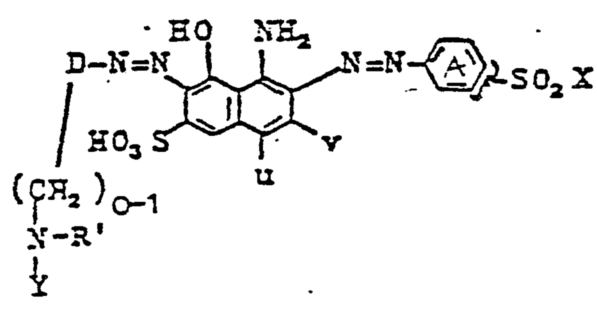

wherein

D = the radical of a diazo component of the benzene or naphthalene series,

X = $-CH=CH_2$, $-CH_2CH_2OSO_3H$, $-CH=CHCl$ or $-CH_2-CH_2Cl$,

Y = a fibre-reactive fluoropyrimidinyl radical which is optionally substituted by further radicals,

R' = H or $CH_3$,

u and v = H or $SO_3H$ where u ≠ v and wherein the benzene nucleus A can also be substituted by $CH_3$, $C_2H_5$, $OCH_3$ or $OC_2H_5$.

2. Dyestuffs of the general formula

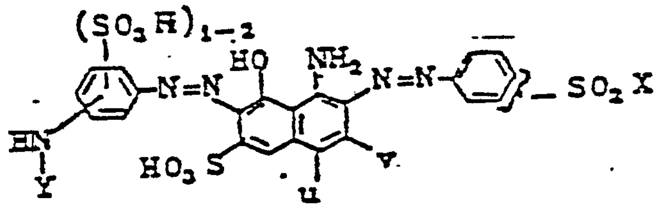

wherein X and Y, u and v have the meaning given in Claim 1.

3. Dyestuffs of the general formula

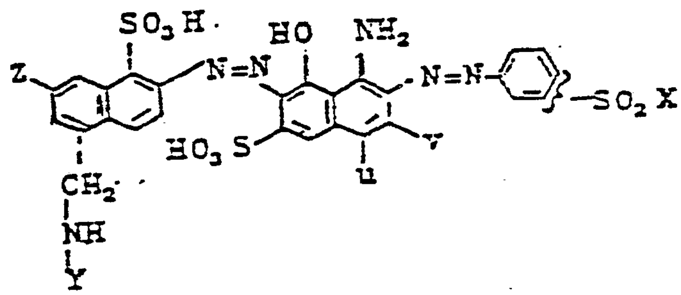

wherein X, Y, u and v have the meaning given in Claim 1 and Z represents H or $SO_3H$.

4. Dyestuffs of the general formula

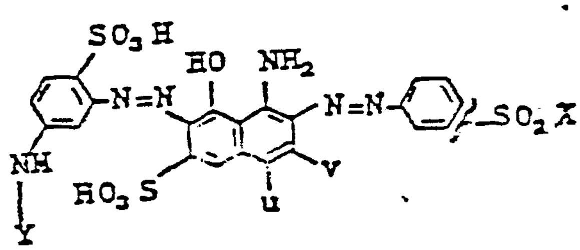

wherein Y, u, v and X have the meaning given in Claim 1.

5. Dyestuffs of the general formula

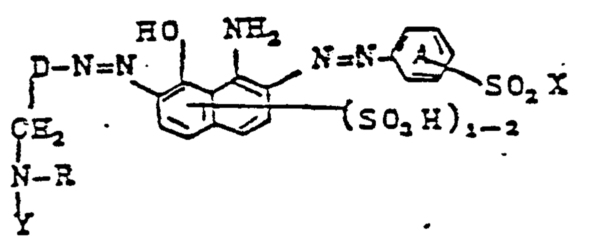

wherein

R = H or $C_1$-$C_4$-alkyl,

D = the radical of a diazo component of the benzene or naphthalene series,

X = $-CH=CH_2$, $-CH_2CH_2OSO_3H$, $-CH=CHCl$ or $-CH_2-CH_2Cl$ and

Y = a fibre-reactive fluoropyrimidinyl radical which is optionally substituted by further radicals and wherein the benzene radical A can also be substituted by $CH_3$, $C_2H_5$, $OCH_3$ or $OC_2H_5$.

6. Dyestuffs of the general formula

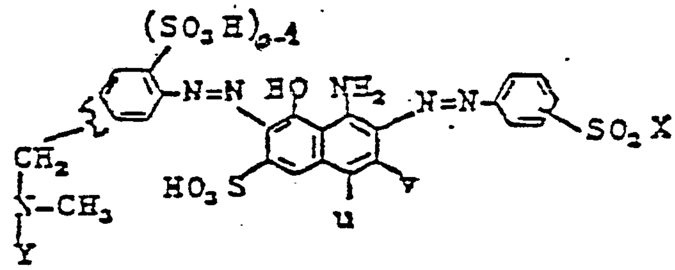

wherein Y, u, v and X have the meaning given in Claim 1.

7. Dyestuffs of Claims 1 to 6, in which Y =

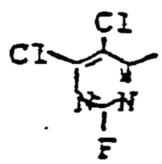 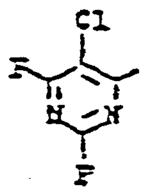, 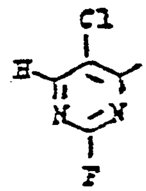, 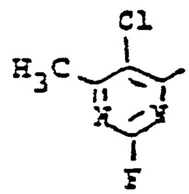

8. Dyestuffs of the general formula

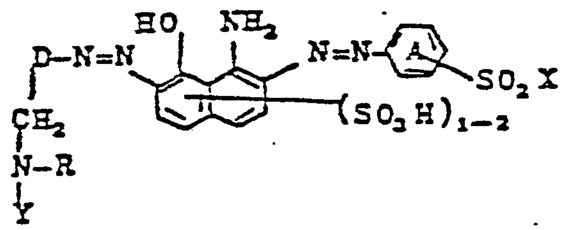

wherein

R = H or $C_1$-$C_4$-alkyl,

D = the radical of a diazo component of the benzene or naphthalene series,

X = $-CH=CH_2$, $-CH_2CH_2OSO_3H$, $-CH=CHCl$ or $-CH_2-CH_2Cl$ and

Y = a fibre-reactive fluorotriazinyl radical which is optionally substituted by further radicals and wherein the benzene A can also be substituted by $CH_3$, $C_2H_5$, $OCH_3$ or $OC_2H_5$.

9. Dyestuffs of the general formula

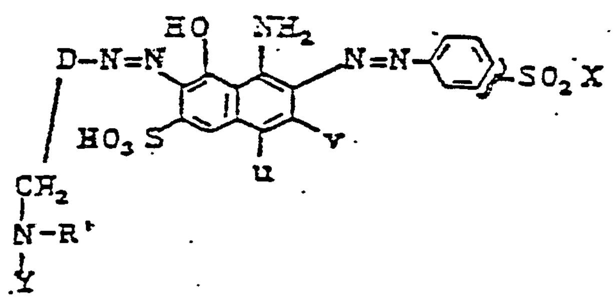

wherein D, X and Y have the meaning given in Claim 8, u and v = H or $SO_3H$ where u ≠ v and wherein R'=H or $CH_3$.

10. Dyestuffs of the general formula

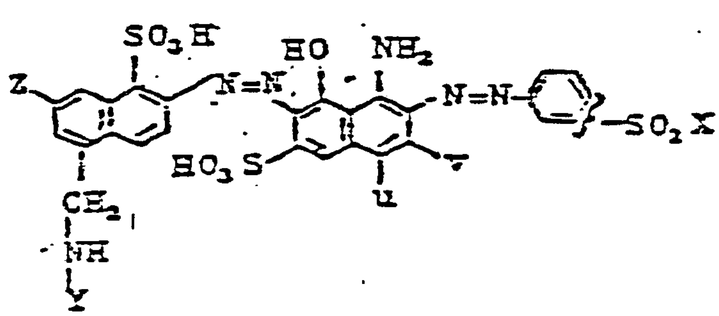

wherein X, Y, u and v have the meaning given in Claim 8 and 9 and Z represents H or $SO_3H$.

11. Dyestuffs of the general formula

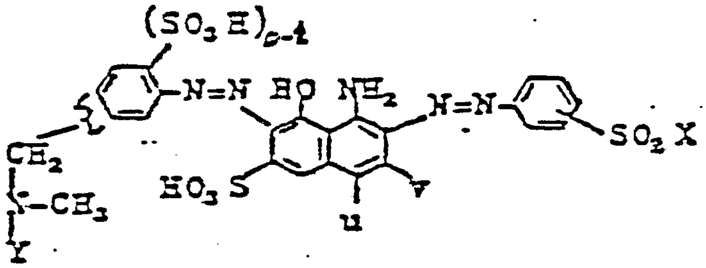

wherein Y, u, v and X have the meaning given in Claim 8 and 9.

12. Dyestuffs of Claims 8 to 11, in which Y =

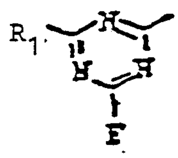

and in which $R_1$ represents

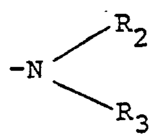

$-OR_4$ or $-SR_4$, wherein

$R_2$ and $R_3$ independently of one another denote hydrogen, amino, $C_1$-$C_4$-alkyl, aryl, aralkyl or cycloalkyl or together, optionally with the inclusion of one or more hetero atoms in particular a 5- or 6-membered ring), and

$R_4$ represents hydrogen, $C_1$-$C_4$-alkyl, aryl or aralkyl.

**Revendications**

1. Colorants de formule générale

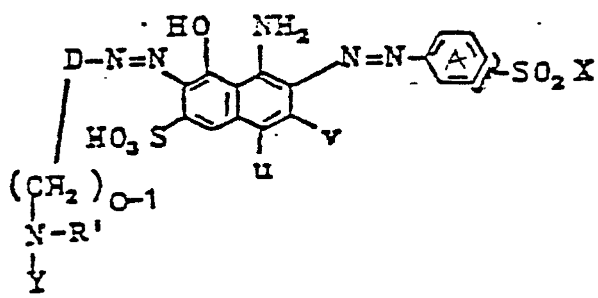

dans laquelle

D est le reste d'un composant diazotable de la série du benzène ou du naphtalène,

X représente $-CH=CH_2$, $-CH_2CH_2OSO_3H$, $-CH=CHCl$, $-CH_2-CH_2Cl$,

Y est un reste fluoropyrimidinyle réactif envers la fibre, éventuellement substitué par d'autres restes,

R' représente H, $CH_3$

u, v représentent H ou $SO_3H$, u étant différent de v et le noyau benzénique A pouvant encore être substitué par $CH_3$, $C_2H_5$, $OCH_3$ ou $OC_2H_5$.

2. Colorants de formule générale

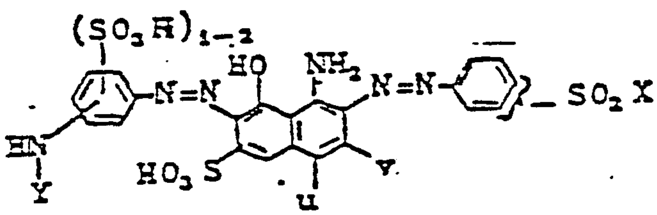

dans laquelle X.et Y, u et v ont la définition indiquée dans la revendication 1.

3. Colorants de formule générale

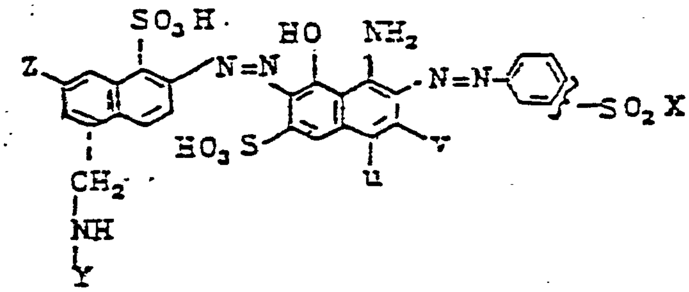

dans laquelle X, Y, u et v ont la définition indiquée dans la revendication 1 et Z représente H ou $SO_3H$.

4. Colorants de formule générale

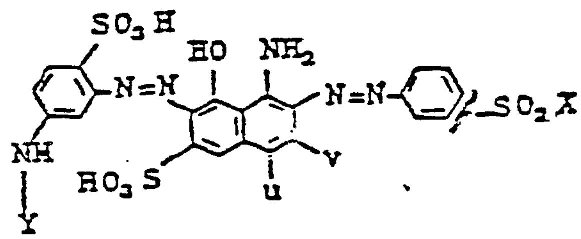

dans laquelle Y, u, v et X ont la définition indiquée dans la revendication 1.

5. Colorants de formule générale

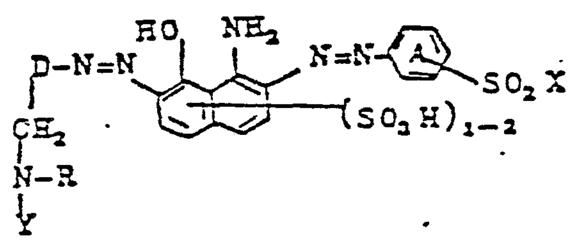

dans laquelle

R représente H, un groupe alkyle en $C_1$ à $C_4$

D est le reste d'un composant diazotable de la série du benzène ou du naphtalène

X représente $-CH=CH_2$, $-CH_2CH_2OSO_3H$, $-CH=CHCl$, $-CH_2-CH_2Cl$

Y représente un reste fluoropyrimidinyle réactif envers la fibre, éventuellement substitué par d'autres restes, et dans laquelle le noyau benzénique A peut encore être substitué par $CH_3$, $C_2H_5$, $OCH_3$, $OC_2H_5$.

6. Colorants de formule générale

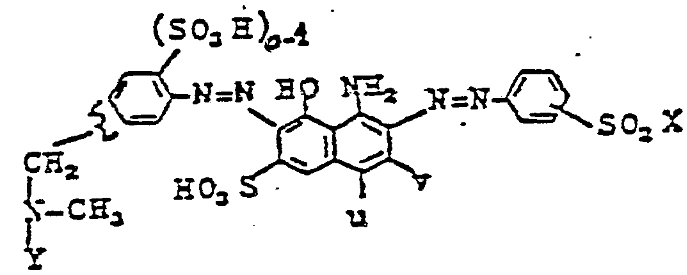

dans laquelle Y, u, v et X ont la définition indiquée dans la revendication 1.

7. Colorants suivant les revendications 1 à 6, dans lesquels Y représente

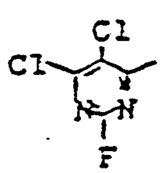 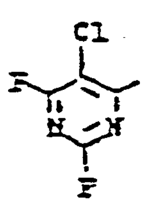 , 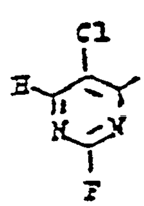 , 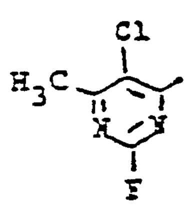

8. Colorants de formule générale

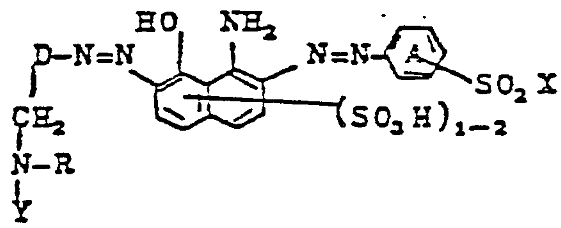

dans laquelle

R représente H, un groupe alkyle en $C_1$ à $C_4$

D est le reste d'un composant diazotable de la série du benzène ou du naphtalène

X représente $—CH{=}CH_2$, $—CH_2CH_2OSO_3H$, $—CH{=}CHCl$, $—CH_2—CH_2Cl$

Y est un reste fluorotriazinyle réactif envers la fibre, éventuellement substitué par d'autres restes et le noyau benzénique A peut encore être substitué par $CH_3$, $C_2H_5$, $OCH_3$, $OC_2H_5$.

9. Colorants de formule générale

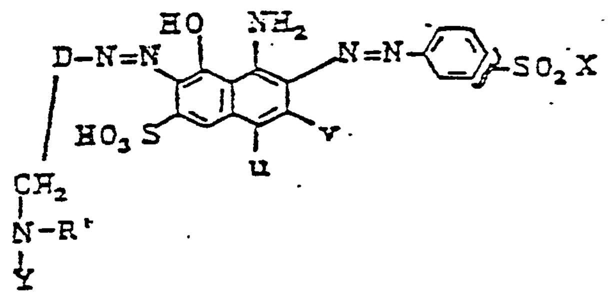

dans laquelle D, X et Y ont la définition indiquée dans la revendication 8, u et v représentent H ou $SO_3H$, u étant différent de v, et R' représente H ou $CH_3$;

10. Colorants de formule générale

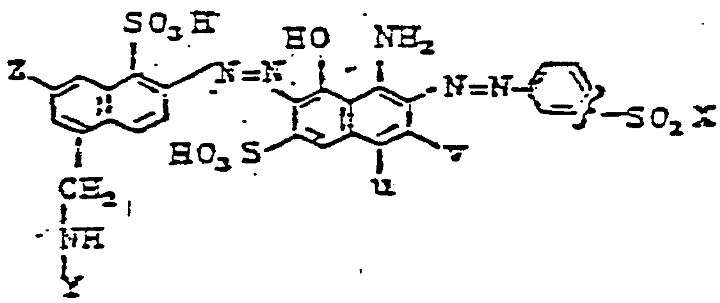

dans laquelle X, Y, u et v ont la définition indiquée dans la revendication 8 ou 9 et Z représente H ou $SO_3H$.

11. Colorants de formule générale

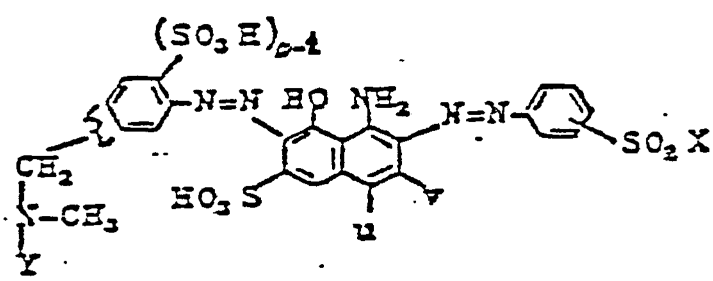

dans laquelle Y, u, v et X ont la définition indiquée dans la revendication 8 ou 9.

12. Colorants suivant les revendications 8 à 11, dans lesquels Y représente

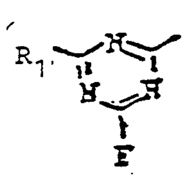

et dans lesquels $R_1$ représente

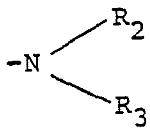

$—OR_4$ ou $—SR_4$,

$R_2$ et $R_3$ représentent, indépendamment l'un de l'autre, l'hydrogène, un groupe amino, alkyle en $C_1$ à $C_4$, aryle, aralkyle ou cycloalkyle ou forment ensemble, le cas échéant conjointement avec un ou plusieurs hétéro-atomes, notamment d'oxygène et/ou d'azote, un noyau (en particulier un noyau pentagonal ou hexagonal),

$R_4$ représente l'hydrogène, un groupe alkyle en $C_1$ à $C_4$, aryle ou aralkyle.